# FASCICULE DE BREVET EUROPEEN

(11) **EP 1 626 160 B1**
(45) Date de publication et mention de la délivrance du brevet: **13.10.2010**
(21) Numéro de dépôt: 05291291.2
(22) Date de dépôt: 16.06.2005
(51) Int. Cl.: F01D 5/08, F01D 25/20

(54) **Tube de dégazage pour arbre basse-pression de turbomachine**
Entgasensleitung für Niederdruckwellen einer Turbomaschine
Degassing pipe for low pressure turbine shaft

(30) Priorité: 29.06.2004 FR 0407139
(43) Date de publication de la demande: 15.02.2006
(73) Titulaire: SNECMA, 75015 Paris (FR)
(72) Inventeur: Dambrine, Bruno, 77820 Le Chatelet en Brie (FR); Hugonie, Aymeric, 91360 Cheptainville (FR); Mons, Claude, 77176 Savigny Le Temple (FR); Soupizon, Jean-Luc, 77000 Vaux le Penil (FR)
(74) Mandataire: Joly, Jean-Jacques

(56) Documents cités:
- EP-A- 0 635 667
- US-B1- 6 354 334

## Description

### Arrière-plan de l'invention

La présente invention se rapporte au domaine général des tubes de dégazage destinés à être montés à l'intérieur de l'arbre basse-pression d'une turbomachine.

Dans une turbomachine, l'arbre du corps basse-pression, ci-après appelé arbre basse-pression, entraîne en rotation, à son extrémité amont, l'arbre de la soufflante. Cet arbre de la soufflante est supporté en rotation par un palier à roulement qu'il est nécessaire de lubrifier et de refroidir. Dans ce but, de l'huile est injectée entre les bagues du palier à roulement par un circuit d'alimentation. L'huile est confinée dans une enceinte dans laquelle elle se mélange à l'air avant d'être évacuée vers le carter d'échappement de la turbomachine en s'écoulant à l'intérieur de l'arbre basse-pression.

Afin d'éviter que l'huile s'écoulant à l'intérieur de l'arbre basse-pression ne vienne endommager l'arbre basse-pression, notamment en se cokéfiant sur celui-ci, il est connu de monter de façon concentrique à l'intérieur de l'arbre un tube creux d'évacuation de l'huile, appelé tube de dégazage. Les tubes de dégazage doivent répondre à certains critères : notamment, ils doivent être légers, étanches à l'huile et présenter une bonne capacité de déformation à la flexion afin d'éviter leur rupture franche en cas de panne.

Pour répondre à ces critères, il a été envisagé de réaliser les tubes de dégazage en métal, par exemple en titane ou en nickel. De tels tubes présentent une bonne capacité de flambage permettant d'éviter une rupture franche en cas de panne. Leur problème principal est le rapport module / masse volumique du métal qui impose la mise en place de supports intermédiaires de fixation entre l'arbre basse-pression et le tube afin d'éviter tout déplacement radial du tube à l'intérieur de l'arbre lors de la rotation de ce dernier. De tels supports rendent difficile le montage et le démontage du tube dans l'arbre qui sont réalisés en aveugle et, en cas de mauvais positionnement du tube dans l'arbre, des criques apparaissent dans ce dernier.

### Objet et résumé de l'invention

La présente invention a donc pour but principal de pallier de tels inconvénients en proposant un tube de dégazage qui permet de supprimer les supports intermédiaires tout en conservant l'étanchéité à l'huile et une bonne capacité de déformation à la flexion.

A cet effet, il est prévu un tube de dégazage destiné à être monté coaxialement à l'intérieur d'un arbre basse-pression d'une turbomachine, comportant une partie tubulaire creuse métallique ayant une longueur sensiblement identique à celle de l'arbre à l'intérieur duquel ledit tube est destiné à être monté, caractérisé en ce que la surface externe de la partie métallique du tube est recouverte sur au moins une partie de sa longueur d'un matériau composite à base de fibres orientées selon une direction sensiblement longitudinale de façon à conférer au tube une résistance à la flexion.

La présence de fibres en matériau composite orientées selon la direction longitudinale du tube lui confère une bonne capacité de déformation à la flexion lors de la rotation de l'arbre en augmentant de façon significative le module. Le tube de dégazage est ainsi dépourvu de supports intermédiaires de fixation avec l'arbre ce qui facilite son montage et son démontage de l'arbre. L'étanchéité du tube est par ailleurs conservée.

De préférence, le matériau composite recouvrant la surface externe de la partie métallique comporte en outre des fibres tressées destinées à assurer le maintien des fibres longitudinales.

La partie métallique peut être munie à une extrémité amont d'un embout de fixation avec une extrémité amont de l'arbre à l'intérieur duquel le tube est destiné à être monté. Dans ce cas, l'embout de fixation peut comporter un dispositif d'anti-rotation avec l'arbre. Cet embout peut également comporter au moins un joint d'étanchéité avec l'arbre de façon à éviter que de l'huile ne se propage entre l'arbre et le tube de dégazage.

De préférence, la partie métallique du tube de dégazage est en titane et le matériau composite est composé de fibres de carbone imprégnées d'une résine. De telles fibres de carbone peuvent recouvrir, pour les fibres longitudinales, entre 50% et 75% de la surface externe de la partie métallique.

La présente invention a également pour objet un arbre basse-pression de turbomachine comportant un tube de dégazage tel que défini précédemment.

### Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :
- la figure 1 est une vue partielle en coupe longitudinale de la partie amont d'un tube de dégazage selon l'invention montée à l'intérieur d'un arbre basse-pression de turbomachine ; et
- la figure 2 est une vue partielle en coupe longitudinale de la partie aval du tube de dégazage de la figure 1.

### Description détaillée d'un mode de réalisation

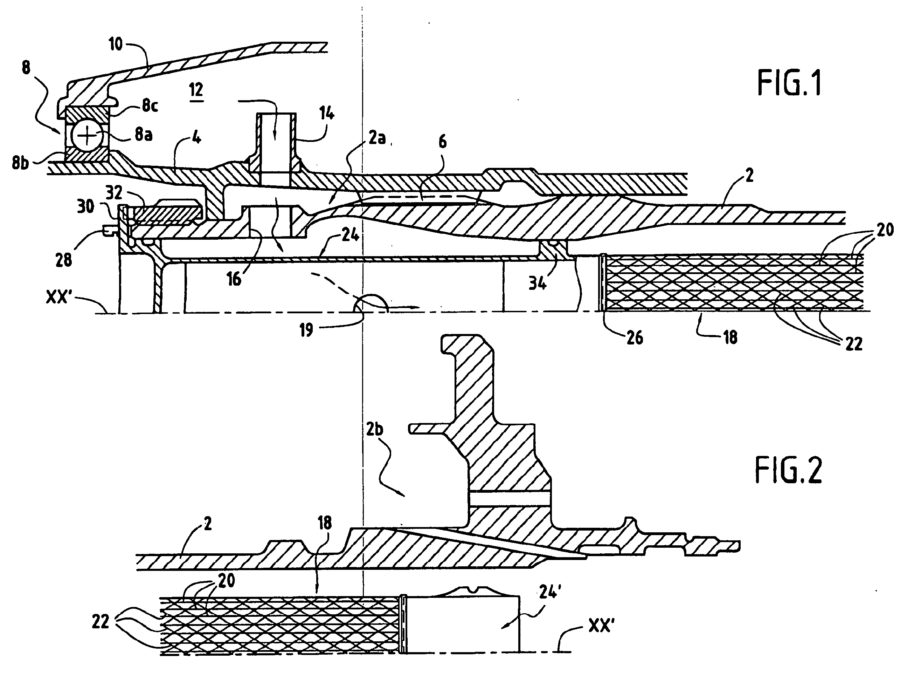

En liaison avec la figure 1, la référence 2 représente partiellement un arbre basse-pression d'une turbomachine. Cet arbre 2, d'axe longitudinal XX', est creux et s'étend sur pratiquement toute la longueur de la turbomachine. Il entraîne en rotation, à son extrémité amont 2a, l'arbre de soufflante 4 par l'intermédiaire de cannelures 6. L'arbre de soufflante 4 est disposé coaxialement autour de l'arbre basse-pression 2.

Des aubes mobiles de soufflante (non représentées) sont fixées au niveau de l'extrémité amont de l'arbre de soufflante 4. L'arbre de soufflante 4 est par ailleurs supporté en rotation par un palier à roulement 8. Ce palier 8 se compose par exemple de billes 8a insérées entre une bague intérieure 8b montée sur l'arbre de soufflante 4 et une bague extérieure 8c montée sur un arbre 10.

Un circuit d'alimentation en huile (non représenté) permet d'acheminer et d'injecter de l'huile entre les bagues 8b, 8c du palier à roulement 8 afin de lubrifier et de refroidir ce dernier. L'huile de lubrification et de refroidissement est confinée dans une enceinte à huile 12 délimitée notamment par l'arbre de soufflante 4 et l'arbre 10 sur lequel est monté la bague extérieure 8c du palier 8.

Au niveau de l'enceinte à huile 12, l'arbre de soufflante est traversé par une pluralité de douilles creuses 14 (ou cheminées) qui permettent d'évacuer l'huile de lubrification et de refroidissement vers l'extérieur de l'enceinte 12. Une pluralité de trous 16 sont pratiqués en regard des douilles creuses 14 dans l'extrémité amont 2a de l'arbre basse-pression 2 afin d'acheminer l'huile de lubrification et de refroidissement vers l'intérieur de l'arbre basse-pression.

Selon l'invention, il est prévu de monter à l'intérieur de l'arbre basse-pression 2, et de façon coaxiale à celui-ci, un tube 18 dit de « dégazage » destiné à évacuer l'huile de lubrification et de refroidissement sans endommager l'arbre basse-pression.

Un tel tube 18 se présente sous la forme d'une partie tubulaire creuse métallique centrée sur l'axe XX' et ayant une longueur sensiblement identique à celle de l'arbre basse-pression 2. Le tube de dégazage 18 s'étend donc depuis l'extrémité amont 2a de l'arbre basse-pression 2 (figure 1) jusqu'à l'extrémité aval 2b de celui-ci (figure 2).

Par ailleurs, le tube de dégazage 18 comporte une pluralité d'ouvertures 19 formées au niveau de son extrémité amont et destinées à permettre l'évacuation de l'huile à l'intérieur de celui-ci.

Conformément à l'invention, la surface externe de la partie métallique du tube 18 est recouverte sur au moins une partie de sa longueur d'un matériau composite à base de fibres 20 orientées selon une direction sensiblement longitudinale (c'est-à-dire selon l'axe XX' du tube) de façon à conférer au tube une résistance à la flexion.

Sur les figures 1 et 2, les fibres longitudinales 20 recouvrent pratiquement entièrement la longueur du tube de dégazage 18. On peut toutefois imaginer que celles-ci ne recouvrent que partiellement la partie métallique du tube, de façon continue ou discontinue.

Ainsi, le tube de dégazage 18 présente un rapport module / masse volumique adéquat pour éviter l'utilisation de supports intermédiaires de fixation entre l'arbre basse-pression 2 et le tube, tout en conservant l'étanchéité et la capacité de déformation plastique du tube. La masse du tube de dégazage est par ailleurs la plus faible possible.

Selon une caractéristique avantageuse de l'invention, le matériau composite comporte en outre des fibres tressées 22 destinées à assurer le maintien des fibres longitudinales 20 sur la partie métallique du tube 18. Ces fibres tressées 22, qui présentent par exemple une inclinaison comprise entre 45° et 60° par rapport à l'axe XX' du tube, recouvrent les fibres longitudinales 20.

De préférence, la partie métallique du tube de dégazage 18 est en titane et le matériau composite est composé de fibres 20, 22 de carbone imprégnées d'une résine. L'utilisation de fibres de carbone est en effet le matériau composite qui permet de conférer au tube la meilleure résistance à la flexion. Les fibres de carbone sont par ailleurs couramment répandues dans l'industrie ce qui rend leur coût moins élevé que d'autres matériaux composites.

Bien entendu, d'autres matériaux peuvent être utilisés pour réaliser les fibres longitudinales et les fibres tressées du tube de dégazage. De même, la partie métallique du tube de dégazage peut être obtenue à partir d'autres métaux, comme le nickel par exemple.

Les fibres de carbone longitudinales 20 peuvent recouvrir entre 50% et 75%, et de préférence environ 60%, de la surface externe de la partie métallique du tube de dégazage 18.

Selon le mode de réalisation du tube illustré sur les figures 1 et 2, la partie métallique du tube de dégazage 18 est munie, à son extrémité amont, d'un embout de fixation 24 avec l'extrémité amont 2a de l'arbre basse-pression 2. Un tel embout de fixation 24 est également métallique (par exemple en titane comme pour la partie tubulaire du tube) et peut être ainsi fixé sur l'extrémité amont de la partie métallique du tube par l'intermédiaire d'une soudure 26.

On notera que les ouvertures 19 permettant l'évacuation de l'huile à l'intérieur du tube de dégazage 18 sont formées de préférence dans l'embout de fixation 24. On notera également que l'extrémité aval de la partie métallique du tube de dégazage 18 peut également être munie d'un embout 24' (figure 2). Un tel embout aval 24' a pour principale fonction de supporter le tube de dégazage et de protéger l'arbre basse-pression en cas d'inflammation du brouillard d'huile.

Selon une caractéristique avantageuse de l'invention, l'embout de fixation 24 comporte un dispositif d'anti-rotation avec l'arbre basse-pression 2. Le dispositif d'anti-rotation se présente par exemple sous la forme d'un doigt 28 de l'arbre basse-pression 2 venant se loger dans un épaulement 30 de l'embout de fixation 24 et permettant ainsi d'éviter toute rotation relative entre le tube et l'arbre basse-pression.

Un écrou de fixation 32 destiné à être serré sur l'arbre basse-pression 2 au niveau de son extrémité amont 2a de façon à coopérer avec l'épaulement 30 de l'embout de fixation 24 permet d'assurer le maintien du tube de dégazage 18 dans l'arbre 2. On notera que le tube de dégazage 18 est monté et démonté de l'intérieur de l'arbre basse-pression 2 par l'avant, c'est-à-dire par l'extrémité amont 2a de l'arbre 2.

Selon une autre caractéristique avantageuse de l'invention, l'embout de fixation 24 comporte au moins un joint d'étanchéité 34 avec l'arbre basse-pression 2. Ce joint d'étanchéité 34 est disposé en aval des ouvertures 19 d'évacuation de l'huile. Il permet d'éviter que de l'huile provenant de l'enceinte 12 ne vienne s'écouler dans l'espace annulaire délimité entre l'arbre basse-pression 2 et le tube de dégazage 18.

Il est par ailleurs possible de protéger les fibres du tube de dégazage contre l'effet néfaste de l'huile en recouvrant celles-ci d'un film protecteur de type Viton®. Ce film protecteur n'est pas représenté sur les figures.

Le procédé de fabrication du tube de dégazage selon l'invention découle de manière évidente de ce qui précède.

La partie métallique du tube de dégazage reste identique à celle des tubes de dégazage connus de l'art antérieur avec suppression des supports intermédiaires de fixation. Les embouts 24, 24' sont soudés aux extrémités amont et aval de la partie métallique. Les fibres longitudinales 20 et tressées 22 sont déposées selon un procédé connu dans le domaine des matériaux composites : après avoir été disposées sur la surface externe de la partie métallique, les fibres sont imprégnées de résine (par exemple une résine d'époxy) puis polymérisées.

Plus particulièrement, les fibres 22 de maintien des fibres longitudinales 20 peuvent être soit tressées directement sur la partie métallique du tube à l'aide d'une bobine, soit tressées préalablement sous forme d'un manchon que l'on enfile ensuite sur la partie métallique du tube.

## Revendications

1. Tube de dégazage (18) destiné à être monté coaxialement à l'intérieur d'un arbre basse-pression (2) d'uné turbomachine, comportant une partie tubulaire creuse métallique ayant une longueur sensiblement identique à celle de l'arbre à l'intérieur duquel ledit tube est destiné à être monté la surface externe de la partie métallique du tube est recouverte sur au moins une partie de sa longueur d'un matériau composite à base de fibres (20) orientées selon une direction sensiblement longitudinale **caractérisé en ce que** de façon à conférer au tube une résistance à la flexion.

2. Tube selon la revendication 1, dans lequel le matériau composite comporte en outre des fibres tressées (22) destinées à assurer le maintien des fibres longitudinales (20).

3. Tube selon l'une des revendications 1 et 2, dans lequel la partie métallique est munie à une extrémité amont d'un embout de fixation (24) avec une extrémité amont (2a) de l'arbre (2) à l'intérieur duquel ledit tube est destiné à être monté.

4. Tube selon la revendication 3, dans lequel l'embout de fixation (24) comporte un dispositif d'anti-rotation (28, 30) avec l'arbre (2) à l'intérieur duquel ledit tube est destiné à être monté.

5. Tube selon l'une des revendications 3 et 4, dans lequel l'embout de fixation (24) comporte au moins un joint d'étanchéité (34) avec l'arbre (2) à l'intérieur duquel ledit tube est destiné à être monté.

6. Tube selon l'une quelconque des revendications 1 à 5, dans lequel la partie métallique est en titane.

7. Tube selon l'une quelconque des revendications 1 à 6, dans lequel le matériau composite est composé de fibres (20, 22) de carbone imprégnées d'une résine.

8. Tube selon la revendication 7, dans lequel les fibres longitudinales (20) de carbone recouvrent entre 50% et 75% de la surface externe de la partie métallique.

9. Arbre basse-pression (2) de turbomachine, **caractérisé en ce qu'**il comporte un tube de dégazage (18) selon l'une quelconque des revendications 1 à 8.

## Claims

1. A drain tube (18) for mounting coaxially inside a low-pressure shaft (2) of a turbomachine, the tube comprising a hollow metal tubular portion of length substantially identical to that of the shaft inside which said tube is to be mounted, **characterized in that** the outside surface of the metal portion of the tube is covered over at least a fraction of its length in a composite material based on fibers (20) oriented along a direction that is substantially longitudinal so as to confer bending strength to the tube.

2. A tube according to claim 1, in which the composite material further comprises braided fibers (22) for holding the longitudinal fibers (20).

3. A tube according to claim 1 or claim 2, in which the metal portion is provided at an upstream end with a fastener endpiece (24) for fastening to an upstream end (2a) of the shaft (2) inside which said tube is to be mounted.

4. A tube according to claim 3, in which the fastener endpiece (24) includes an antirotation device (28, 30) for co-operation with the shaft (2) in which said tube is to be mounted.

5. A tube according to claim 3 or claim 4, in which the fastener endpiece (24) includes at least one sealing gasket (34) for co-operating with the shaft (2) in which said tube is to be mounted.

6. A tube according to any one of claims 1 to 5, in which the metal portion is made of titanium.

7. A tube according to any one of claims 1 to 6, in which the composite material is made of resin-impregnated carbon fibers (20, 22).

8. A tube according to claim 7, in which the longitudinal carbon fibers (20) cover 50% to 75% of the outside surface of the metal portion.

9. A low-pressure turbomachine shaft (2), **characterized in that** it includes a drain tube (18) according to any one of claims 1 to 8.

## Patentansprüche

1. Entgasungsrohr (18), das dazu bestimmt ist, in einer Niederdruckwelle (2) einer Turbomaschine koaxial angebracht zu werden, umfassend einen aus Metall bestehenden rohrförmigen hohlen Teil, der eine Länge aufweist, die mit der Länge der Welle, in der das Rohr angebracht werden soll, im wesentlichen identisch ist, **dadurch gekennzeichnet, daß** die Außenfläche des metallischen Teils des Rohrs über wenigstens einen Teil seiner Länge mit einem Verbundwerkstoff auf der Basis von Fasern (20), die im wesentlichen in Längsrichtung ausgerichtet sind, um dem Rohr eine Biegefestigkeit zu verleihen, überzogen ist.

2. Rohr nach Anspruch 1, wobei der Verbundwerkstoff ferner geflochtene Fasern (22) aufweist, die dazu bestimmt sind, den Halt der Längsfasern (20) sicherzustellen.

3. Rohr nach einem der Ansprüche 1 und 2, wobei der metallische Teil an einem stromaufwärtigen Ende mit einem Ansatz zur Befestigung (24) mit einem stromaufwärtigen Ende (2a) der Welle (2), in der das Rohr angebracht werden soll, versehen ist.

4. Rohr nach Anspruch 3, wobei der Befestigungsansatz (24) eine Verdrehsicherungseinrichtung (28, 30) mit der Welle (2), in der das Rohr angebracht werden soll, umfaßt.

5. Rohr nach einem der Ansprüche 3 und 4, wobei der Befestigungsansatz (24) wenigstens eine Dichtung (34) mit der Welle (2), in der das Rohr angebracht werden soll, aufweist.

6. Rohr nach einem der Ansprüche 1 bis 5, wobei der metallische Teil aus Titan besteht.

7. Rohr nach einem der Ansprüche 1 bis 6, wobei der Verbundwerkstoff aus mit einem Harz imprägnierten Kohlenstoffasern (20, 22) besteht.

8. Rohr nach Anspruch 7, wobei die Kohlenstofflängsfasern (20) 50 % bis 75 % der Außenfläche des metallischen Teils bedecken.

9. Niederdruckwelle (2) einer Turbomaschine, **dadurch gekennzeichnet, daß** sie ein Entgasungsrohr (18) nach einem der Ansprüche 1 bis 8 umfaßt.
